# EUROPEAN PATENT SPECIFICATION

(11) **EP 3 287 251 B1**
(45) Date of publication and mention of the grant of the patent: **19.03.2025**
(21) Application number: 17187638.6
(22) Date of filing: 24.08.2017
(51) Int. Cl.: B29C 45/17, B29C 45/50

(54) **INJECTION UNIT**
INJEKTIONSEINHEIT
UNITÉ D'INJECTION

(30) Priority: 26.08.2016 JP 2016166242
(43) Date of publication of application: 28.02.2018
(73) Proprietor: Sumitomo Heavy Industries, Ltd., Tokyo 141-6025 (JP)
(72) Inventor: MATSUTAKE, Yoshitaka, Chiba 263-0001 (JP)
(74) Representative: Louis Pöhlau Lohrentz

(56) References cited:
- DE-A1- 102009 020 790
- JP-A- 2002 127 184
- JP-A- 2003 001 669
- JP-A- 2015 182 362
- JP-A- H09 254 214
- JP-A- H09 267 369
- JP-A- S6 438 215

## Description

### BACKGROUND OF THE INVENTION

### Field of the Invention

A certain embodiment of the present invention relates to an injection unit.

### Description of Related Art

In an injection molding machine described in Japanese Unexamined Patent Application Publication No. JP H09 322478 A, a cooling fan is installed on an outer surface of a frame, to which a stator core of a servomotor for the injection molding machine is attached, via a fan cover. The cooling fan forcibly performs ventilation in a direction orthogonal to an axial direction of the motor from a cooling air inlet bored in the frame toward a cooling air outlet bored in the frame to cool the inside of the servo motor.

Japanese Patent Document JPS6438215A discloses an injection molding machine in which dust generating areas comprise a cover, wherein the interior of the covers communicates with an exhaust passage.

German Patent Application DE102009020790A1 discloses a drive unit for an injection molding machine which is encased by a cover with a suction hole including a suction device.

Japanese Patent Document JP2002127184A discloses an apparatus for mounting and fixing a mold clamping device and an injection device on a machine base, which is divided into a mold clamping area, a mold area, and an injection area by a partition wall.

Japanese Patent Document JP2003001669A discloses an injection molding machine for injecting a molten resin using a linear motor, comprising a mold and a hollow portion communicating with the void of the mold, and receiving the resin raw material received in the hollow portion.

Japanese Patent Document JP H09 254214 A discloses an injection molding machine wherein a cooling fan cools a motor and air is exhausted from a housing to the outside via an exhaust fan.

An injection unit includes a drive source such as a motor and a mechanical element such as a ball screw which is operated by the drive source. If power is supplied to the drive source, Joule heat, frictional heat, or the like is generated in the drive source, and frictional heat or the like is generated in the mechanical element.

The injection unit includes a cover which surrounds the drive source and the mechanical element. Heat is easily collected inside the cover. Accordingly, an ambient temperature inside the cover easily increases, and a temperature of the drive source or a temperature of the mechanical element easily increases.

In a case where the cooling fan described in Japanese Unexamined Patent Application Publication No. JP H09 322478 A is installed inside the cover along with the drive source or the mechanical element, gas discharged from the cooling air outlet is returned to the cooling air inlet again. Accordingly, cooling effects cannot be sufficiently obtained.

### SUMMARY OF THE INVENTION

The present invention is made in consideration of the above-described problems, and a main object thereof is to provide an injection unit capable of preventing a temperature of the drive source or the mechanical element surrounded by the cover from increasing.

The invention is set out in the appended set of claims.

### BRIEF DESCRIPTION OF THE DRAWINGS

Fig. 1 is a top view of an injection molding machine according to an embodiment.
Fig. 2 is a sectional view of an injection unit taken along line II-II in Fig. 1.
Fig. 3 is a sectional view of the injection unit taken along line III-III in Fig. 1.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

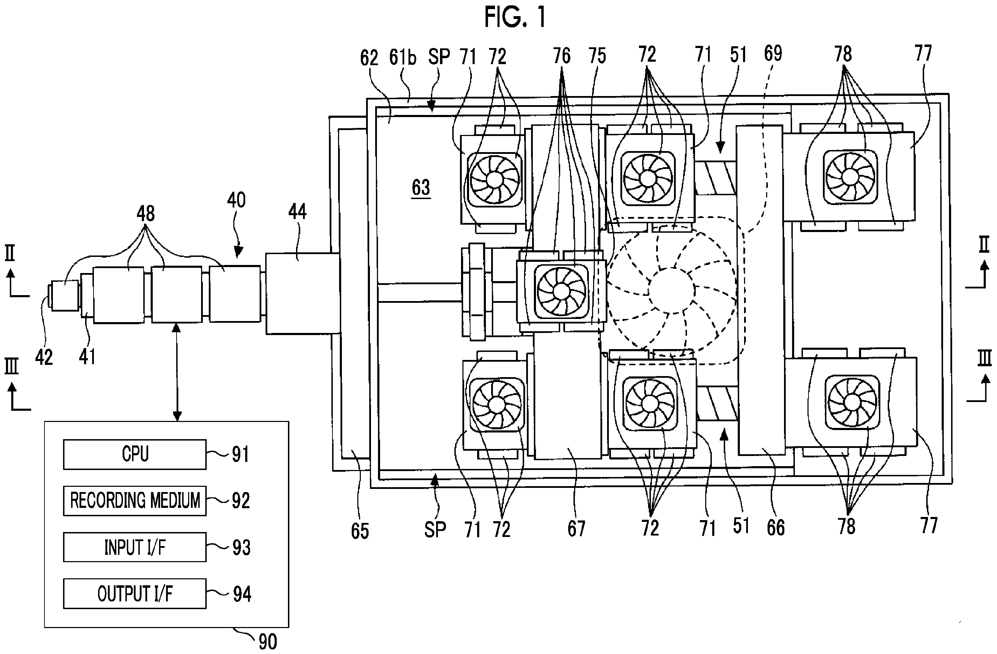

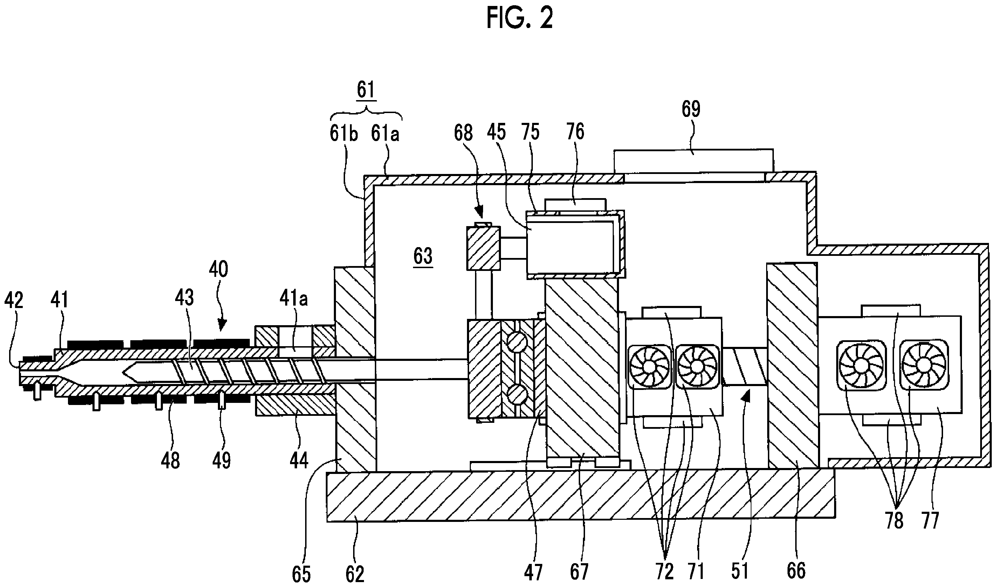

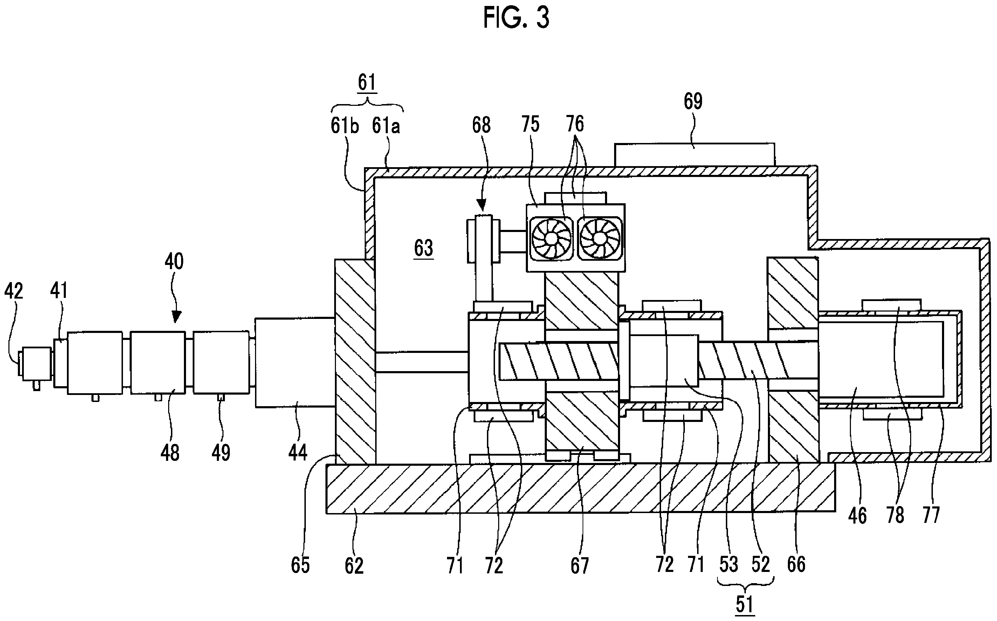

Fig. 1 is a top view of an injection molding machine according to an embodiment. In Fig. 1, in order to show the inside of a cover 61, a ceiling portion 61a of the cover 61 shown in Fig. 2 or 3 is removed. However, a position of an exhaust fan 69 attached to the ceiling portion 61a is indicated by dashed lines. Fig. 2 is a sectional view of an injection unit taken along line II-II in Fig. 1. Fig. 3 is a sectional view of the injection unit taken along line III-III in Fig. 1.

As shown in Figs. 1 to 3, the injection molding machine includes an injection unit 40 and a controller 90. Hereinafter, a movement direction (a left direction in Figs. 1 to 3) of a screw 43 during filling is defined as a front side and the movement direction (a right direction in Figs. 1 to 3) of the screw 43 during plasticizing is defined as a rear side.

The injection unit 40 comes into contact with a mold unit (not shown), and fills the inside of the mold unit with a molding material. The molding material filling the inside of the mold unit is cooled and solidified, and thus, a molding product is obtained. For example, the injection unit 40 includes a cylinder 41, a nozzle 42, the screw 43 (refer to Fig. 2), a cooler 44, a plasticizing motor 45 (refer to Fig. 2), an injection motor 46 (refer to Fig. 3), a pressure detector 47 (refer to Fig. 2), a heater 48, and a temperature detector 49.

The cylinder 41 heats the molding material which is supplied from a supply port 41a shown in Fig. 2 to the inside of the cylinder 41. The supply port 41a is formed on the rear portion of the cylinder 41. The cooler 44 such as a water cooling cylinder is provided on the outer periphery of the rear portion of the cylinder 41. A heater 48 such as a band heater and the temperature detector 49 are provided on the outer periphery of the cylinder 41 on the front side of the cooler 44.

The cylinder 41 is divided into a plurality of zones in an axial direction of the cylinder 41. The heater 48 and the temperature detector 49 are provided in each zone. The controller 90 controls the heater 48 such that a detection temperature of the temperature detector 49 for each zone becomes a set temperature.

The nozzle 42 is provided on the front end portion of the cylinder 41 and presses the mold unit. The heater 48 and the temperature detector 49 are provided on the outer periphery of the nozzle 42. The controller 90 controls the heater 48 such that a detection temperature of the nozzle 42 becomes a set temperature.

The screw 43 is disposed in the cylinder 41 so as to be rotatable and movable forward or backward. If the screw 43 rotates, the molding material is fed forward along spiral grooves of the screw 43. The molding material is gradually melted by heat of the cylinder 41 while being fed forward. The liquid molding material is fed to the front portion of the screw 43 and is accumulated in the front portion of the cylinder 41, and thus, the screw 43 moves backward. Thereafter, if the screw 43 moves forward, the molding material in front of the screw 43 is injected from the nozzle 42 and fills the inside of the mold unit.

The plasticizing motor 45 rotates the screw 43.

The injection motor 46 moves the screw 43 forward or backward. The rotary motion of the injection motor 46 is converted into the linear motion of the screw 43 by the motion conversion mechanism 51. As shown in Fig. 3, the motion conversion mechanism 51 includes a screw shaft 52 and a screw nut 53 which is screwed to the screw shaft 52. A ball or a roller may be interposed between the screw shaft 52 and the screw nut 53.

The injection motor 46 and the motion conversion mechanism 51 are symmetrically disposed about the center line of the cylinder 41 or the screw 43 when viewed from above. In addition, each of the number of the injection motors 46 and the number of the motion conversion mechanisms 51 is not particularly limited, and, for example, may be one.

The pressure detector 47 is provided on a force transmission path between the injection motor 46 and the screw 43 and detects a load applied to the pressure detector 47. The pressure detector 47 sends signals indicating the detection results to the controller 90. The detection results of the pressure detector 47 are used to control or monitor a pressure received by the screw 43 from the molding material, a back pressure with respect to the screw 43, a pressure applied from the screw 43 to the molding material, or the like.

The injection unit 40 performs a filling process, a holding pressure process, a plasticizing process, or the like under the control of the controller 90.

In the filling process, the injection motor 46 is driven to move the screw 43 forward at a set speed, and the cavity space inside the mold unit is filled with the liquid molding material accumulated in front of the screw 43. For example, a position or speed of the screw 43 is detected using an encoder of the injection motor 46. The encoder of the injection motor 46 detects the rotation of the injection motor 46 and sends signals indicating the detection results to the controller 90. If the position of the screw 43 reaches a set position, switching (so called V/P switching) from the filling process to the holding pressure process is performed. The set speed of the screw 43 maybe changed according to the position of the screw 43, the time, or the like.

Moreover, in the filling process, after the position of the screw 43 reaches the set position, the screw 43 may temporarily stop at the set position, and thereafter, the V/P switching may be performed. Immediately before the V/P switching, instead of stopping the screw 43, the screw 43 may move forward or may move backward at a very slow speed.

In the holding pressure process, the injection motor 46 is driven to press the screw 43 forward at a set pressure, and a pressure is applied to the molding material inside the mold unit. Accordingly, insufficient molding materials caused by cooling shrinkage can be replenished. For example, the pressure of the molding material is detected using the pressure detector 47. The pressure detector 47 sends signals indicating the detection results to the controller 90.

In the holding pressure process, the molding material inside the cavity space is gradually cooled, and when the holding pressure process is completed, the inlet of the cavity space is closed by the molding material which is solidified. This state is referred to as a gate seal, and a backflow of the molding material from the cavity space is prevented. After the holding pressure process, a cooling process starts. In the cooling process, solidification of the molding material inside the cavity space is performed. In order to shorten a molding cycle, the plasticizing process may be performed during the cooling process.

In the plasticizing process, the plasticizing motor 45 is driven to rotate the screw 43 at a set rotating speed and the molding material is fed forward along the spiral grooves of the screw 43 by the screw 43. According to this, the molding material is gradually melted. The screw 43 moves backward as the liquid molding material is fed to the front side of the screw 43 and is accumulated in front of the cylinder 41. For example, the rotating speed of the screw 43 is detected using an encoder of the plasticizing motor 45. The encoder of the plasticizing motor 45 sends signals indicating the detection results to the controller 90.

In the plasticizing process, in order to restrict an abrupt backward movement of the screw 43, the injection motor 46 may be driven so as to apply a set back pressure to the screw 43. For example, the back pressure with respect to the screw 43 is detected using the pressure detector 47. The pressure detector 47 sends signals indicating the detection results to the controller 90. If the screw 43 moves backward to the set position and a predetermined amount of the molding materials is accumulated in front of the screw 43, the plasticizing process ends.

As shown in Fig. 1, the controller 90 includes a Central Processing Unit (CPU) 91, a recording medium 92 such as a memory, an input interface 93, and an output interface 94. The controller 90 executes a program stored in the recording medium 92 using the CPU 91 to perform various controls. In addition, the controller 90 receives signals from the outside using an input interface 93 and sends the signals to the outside using the output interface 94.

Meanwhile, the injection unit 40 includes a cover 61 which surrounds the plasticizing motor 45, the injection motor 46, the motion conversion mechanism 51, or the like in addition to the plasticizing motor 45, the injection motor 46, the motion conversion mechanism 51, or the like. The cover 61 forms an accommodation chamber 63 which accommodates the plasticizing motor 45, the injection motor 46, the motion conversion mechanism 51, or the like along with the base 62. The cover 61 includes the ceiling portion 61a which forms an upper surface of the accommodation chamber 63 and a side wall portion 61b which forms a side surface of the accommodation chamber 63. A gap SP shown in Fig. 1 is formed between the side wall portion 61b of the cover 61 and the base 62.

A front support 65 which holds a rear end portion of the cylinder 41 and a rear support 66 which holds the injection motor 46 are fixed to the base 62. A pressure plate 67 which holds the plasticizing motor 45 is provided so as to be movable forward or backward between the front support 65 and the rear support 66.

The pressure plate 67 holds a bearing which rotatably supports an extension shaft of the screw 43. The rotary motion of the plasticizing motor 45 is transmitted to the screw 43 by a rotation transmission mechanism 68 such as a belt, a pulley, or the like. Meanwhile, the rotary motion of the injection motor 46 is converted into the linear motion of the pressure plate 67 by the motion conversion mechanism 51 and is transmitted to the screw 43.

As described above, the motion conversion mechanism 51 includes the screw shaft 52 and the screw nut 53 which is screwed to the screw shaft 52. The screw shaft 52 is fixed to an output shaft of the injection motor 46. Meanwhile, the screw nut 53 is fixed to the pressure plate 67. The injection motor 46 is driven to rotate the screw shaft 52. Accordingly, the screw nut 53 moves forward or backward and the screw 43 moves forward or backward along with the pressure plate 67.

Here, the center line of the screw shaft 52 may coincide with the center line of the injection motor 46 as shown in Fig. 1 or 3, or may be deviated from the center line of the injection motor 46. In the latter case, a rotation transmission mechanism such as a belt or pulley is provided between the output shaft of the injection motor 46 and the screw shaft 52. In this case, if the injection motor 46 is driven, the screw shaft 52 rotates to move the screw nut 53 forward or backward, and thus, the pressure plate 67 moves forward or backward.

In addition, the disposition of the screw shaft 52 and the screw nut 53 is not limited to the above-described disposition. In addition to the disposition, for example, as the disposition of the screw shaft 52 and the screw nut 53, the disposition of the following (1) or the disposition of the following (2) may be adopted.

(1) An extension shaft on the rear side of the screw shaft 52 is splined to the output shaft of the injection motor 46 and an extension shaft on the front side of the screw shaft 52 is rotatably supported by a bearing held to the pressure plate 67. Meanwhile, the screw nut 53 is fixed to the rear support 66. If the injection motor 46 is driven, the screw shaft 52 moves forward or backward while rotating. Accordingly, the pressure plate 67 moves forward or backward.

Here, the center line of the screw shaft 52 may coincide with the center line of the injection motor 46 or may be deviated from the center line of the injection motor 46. In the latter case, a rotation transmission mechanism such as a belt or pulley is provided between the output shaft of the injection motor 46 and a rotation member deviated from the output shaft, and the extension shaft on the rear side of the screw shaft 52 is splined to the rotation member. In this case, if the injection motor 46 is driven, the screw shaft 52 moves forward or backward while rotating, and thus, the pressure plate 67 moves forward or backward.

(2) The extension shaft on the front side of the screw shaft 52 is fixed to the pressure plate 67. Meanwhile, the screw nut 53 is fixed to the output shaft of the injection motor 46. If the injection motor 46 is driven, the screw nut 53 moves the screw shaft 52 forward or backward while rotating, and thus, the pressure plate 67 moves forward or backward.

Here, the center line of the screw nut 53 may coincide with the center line of the injection motor 46 or may be deviated from the center line of the injection motor 46. In the latter case, a rotation transmission mechanism such as a belt or pulley is provided between the output shaft of the injection motor 46 and the screw nut 53. In this case, if the injection motor 46 is driven, the screw nut 53 rotates to move the screw shaft 52 forward or backward, and thus, the pressure plate 67 moves forward or backward.

Meanwhile, if the drive source such as the plasticizing motor 45 or the injection motor 46 is driven, Joule heat or friction heat is generated in the drive source. In addition, friction heat is generated in the mechanical element operated by the drive source, for example, in the rotation transmission mechanism 68, the motion conversion mechanism 51, or the like. The heat is generated inside the cover 61.

Accordingly, the injection unit 40 of the present embodiment includes an exhaust fan 69 which discharges gas inside the cover 61 to the outside of the cover 61. The heat generated inside the cover 61 can be discharged and the inside of the cover 61 can be cooled. Accordingly, it is possible to prevent the temperature of the drive source or the mechanical element from increasing. Therefore, it is possible to decrease a maintenance cost of the drive source or the mechanical element.

In order to discharge gas inside the cover 61 to the outside of the cover 61, the exhaust fan 69 may suck the gas from the outside of the cover 61 to the inside thereof or may discharge the gas from the inside of the cover 61 to the outside thereof. In the latter case, a high-temperature gas inside the cover 61 is directly discharged. Accordingly, it is possible to effectively decrease the temperature inside the cover 61.

The exhaust fan 69 is operated under the control of the controller 90. Heating values or allowable temperatures per unit time of the drive source or the mechanical element are different from each other. Accordingly, the controller 90 may operate the exhaust fan 69 at all the time while a cycle operation of repeatedly manufacturing a molding product is performed. A rotating speed of the exhaust fan 69 maybe set so as to increase as the temperature inside the cover 61 increases. If a predetermined time elapses after the cycle operation ends, the controller 90 may stop the exhaust fan 69.

The exhaust fan 69 is attached to the ceiling portion 61a of the cover 61. In addition, the attachment position of the exhaust fan 69 is not particularly limited. For example, the exhaust fan 69 may be attached to the side wall portion 61b of the cover 61 or the like. In addition, the exhaust fan 69 may be attached to the base 62.

For example, the exhaust fan 69 discharges the gas inside the cover 61 to the outside of the cover 61 via an opening portion of the cover 61. The opening portion of the cover 61 becomes a discharge portion of the gas. An air pressure inside the cover 61 is decreased by the discharge of the gas, and air outside the cover 61 is introduced to the inside of the cover 61 by an air pressure difference. For example, the introduction portion may be the gap SP which is formed between the side wall portion 61b of the cover 61 and the base 62.

In addition, the exhaust fan 69 may suck air outside the cover 61 to the inside of the cover 61 via an opening portion of the cover 61. The opening portion of the cover 61 becomes the introduction portion of the air. The air pressure inside the cover 61 is increased by the introduction of the gas, and air inside the cover 61 is discharged to the outside of the cover 61 by the air pressure difference. For example, the discharge portion may be the gap SP which is formed between the side wall portion 61b of the cover 61 and the base 62.

The introduction portion of the gas and the discharge portion of the gas may be positioned at positions facing each other. Moreover, each of the introduction portion of the gas and the discharge portion of the gas may be the opening portion formed on the base 62 in addition to the opening portion formed on the cover 61 or the gas SP formed between the side wall portion 61b of the cover 61 and the base 62. The base 62 may be formed in a frame shape.

The number of the exhaust fans 69 is one in the drawing. However, a plurality of exhaust fans 69 may be provided. In this case, both the exhaust fan 69 which discharges the gas inside the cover 61 to the outside of the cover 61 and the exhaust fan 69 which sucks the gas outside the cover 61 to the inside of the cover 61 may be used.

The injection unit 40 includes motion conversion mechanism covers 71 which surround the motion conversion mechanisms 51 and motion conversion mechanism cooling fans 72 which cools the motion conversion mechanisms 51. Each of the motion conversion mechanism cooling fans 72 discharges the gas inside the motion conversion mechanism cover 71 to the outside of the motion conversion mechanism cover 71. Heat generated inside the motion conversion mechanism cover 71 can be discharged and the inside of the motion conversion mechanism cover 71 can be cooled. Accordingly, it is possible to prevent the temperature of the motion conversion mechanism 51 from increasing.

In order to discharge the gas inside the motion conversion mechanism cover 71 to the outside of the motion conversion mechanism cover 71, the motion conversion mechanism cooling fan 72 may discharge the gas from the inside of the motion conversion mechanism cover 71 to the outside thereof or may suck the air from the outside of the motion conversion mechanism cover 71 to the inside thereof. In the latter case, air can come into direct contact with the motion conversion mechanism 51, and thus, it is possible to effectively decrease the temperature of the motion conversion mechanism 51.

The motion conversion mechanism cooling fan 72 is operated under the control of the controller 90. For example, in a case where the temperature of the motion conversion mechanism 51 exceeds a set temperature, the controller 90 operates the motion conversion mechanism cooling fan 72. The rotating speed of the motion conversion mechanism cooling fan 72 may be set so as to increase as the temperature of the motion conversion mechanism 51 increases. Meanwhile, in a case where the temperature of the motion conversion mechanism 51 is equal to or less than the set temperature, the controller 90 stops the motion conversion mechanism cooling fan 72.

As the motion conversion mechanism cooling fan 72, one of the fan which discharges gas inside the motion conversion mechanism cover 71 to the outside thereof and the fan which sucks gas outside the motion conversion mechanism cover 71 to the inside thereof is used or both thereof are used. An introduction portion of gas or a discharge portion of gas is provided in the motion conversion mechanism cover 71. Heat radiation fins may be provided on the outer periphery of the motion conversion mechanism cover 71.

The motion conversion mechanism cooling fans 72 are attached to the motion conversion mechanism cover 71. The number of the motion conversion mechanism cooling fans 72 or the attachment position thereof is not particularly limited. In addition, the number of the motion conversion mechanism covers 71 or the attachment position thereof is not particularly limited.

Meanwhile, the motion conversion mechanism covers 71 and the motion conversion mechanism cooling fans 72 are surrounded by the cover 61.

Moreover, the exhaust fan 69 discharges the gas discharged from the insides of the motion conversion mechanism covers 71 by the motion conversion mechanism cooling fans 72 to the outside of the cover 61. Accordingly, it is possible to prevent the gas discharged from the inside of the motion conversion mechanism covers 71 from being returned to the insides of the motion conversion mechanism covers 71 again. Therefore, it is possible to effectively cool the insides of the motion conversion mechanism covers 71 and it is possible to shorten operation times of the motion conversion mechanism cooling fans 72.

Each of the motion conversion mechanism covers 71 corresponds to a mechanical element cover described in claims and each of the motion conversion mechanism cooling fans 72 corresponds to a mechanical element cooling fan described in claims. In addition, the mechanical element surrounded by the mechanical element cover is not limited to the motion conversion mechanism 51. For example, the mechanical element may be the rotation transmission mechanism 68 or the like and may be any one as long as it generates friction heat.

The injection unit 40 includes a plasticizing motor cover 75 which surrounds the plasticizing motor 45 and plasticizing motor cooling fans 76 which cool the plasticizing motor 45. Each of the plasticizing motor cooling fans 76 discharges the gas inside the plasticizing motor cover 75 to the outside of the plasticizing motor cover 75. Heat generated inside the plasticizing motor cover 75 can be discharged and the inside of the plasticizing motor cover 75 can be cooled. Accordingly, it is possible to prevent the temperature of the plasticizing motor 45 from increasing.

In order to discharge the gas inside the plasticizing motor cover 75 to the outside of the plasticizing motor cover 75, the plasticizing motor cooling fan 76 may discharge the gas from the inside of the plasticizing motor cover 75 to the outside thereof or may suck the air from the outside of the plasticizing motor cover 75 to the inside thereof. In the latter case, air can come into direct contact with the plasticizing motor 45, and thus, it is possible to effectively decrease the temperature of the plasticizing motor 45.

The plasticizing motor cooling fan 76 is operated under the control of the controller 90. For example, in a case where the temperature of the plasticizing motor 45 exceeds a set temperature, the controller 90 operates the plasticizing motor cooling fan 76. The rotating speed of the plasticizing motor cooling fan 76 may be set so as to increase as the temperature of the plasticizing motor 45 increases. Meanwhile, in a case where the temperature of the plasticizing motor 45 is equal to or less than the set temperature, the controller 90 stops the plasticizing motor cooling fan 76.

As the plasticizing motor cooling fan 76, one of the fan which discharges gas inside the plasticizing motor cover 75 to the outside thereof and the fan which sucks gas outside the plasticizing motor cover 75 to the inside thereof is used or both thereof are used. An introduction portion of gas or a discharge portion of gas is provided in the plasticizing motor cover 75. Heat radiation fins may be provided on the outer periphery of the plasticizing motor cover 75.

The plasticizing motor cooling fans 76 are attached to the plasticizing motor cover 75. The number of the plasticizingmotor cooling fans 76 or the attachment position thereof is not particularly limited.

Meanwhile, the plasticizing motor cover 75 and the plasticizing motor cooling fans 76 are surrounded by the cover 61.

Moreover, the exhaust fan 69 discharges the gas discharged from the inside of the plasticizing motor cover 75 by the plasticizing motor cooling fans 76 to the outside of the cover 61. Accordingly, it is possible to prevent the gas discharged from the inside of the plasticizing motor cover 75 from being returned to the inside of the plasticizing motor cover 75 again. Therefore, it is possible to effectively cool the insides of the plasticizing motor cover 75 and it is possible to shorten operation times of the plasticizing motor cooling fans 76.

The plasticizing motor cover 75 corresponds to a drive source cover described in claims and the plasticizing motor cooling fan 76 corresponds to a drive source cooling fan described in claims. In addition, the drive source surrounded by the drive source cover is not limited to the plasticizing motor 45. For example, the drive source may be the injection motor 46 or the like.

The injection unit 40 includes injection motor covers 77 which surround the injection motors 46 and injection motor cooling fans 78 which cool the injection motors 46. Each of the injection motor cooling fans 78 discharges the gas inside the injection motor cover 77 to the outside of the injection motor cover 77. Heat generated inside the injection motor cover 77 can be discharged and the inside of the injection motor cover 77 can be cooled. Accordingly, it is possible to prevent the temperature of the injection motor 46 from increasing.

In order to discharge the gas inside the injection motor cover 77 to the outside of the injection motor cover 77, the injection motor cooling fan 78 may discharge the gas from the inside of the injection motor cover 77 to the outside thereof or may suck the air from the outside of the injection motor cover 77 to the inside thereof. In the latter case, air can come into direct contact with the injection motor 46, and thus, it is possible to effectively decrease the temperature of the injection motor 46.

The injection motor cooling fan 78 is operated under the control of the controller 90. For example, in a case where the temperature of the injection motor 46 exceeds a set temperature, the controller 90 operates the injection motor cooling fan 78. The rotating speed of the injection motor cooling fan 78 may be set so as to increase as the temperature of the injection motor 46 increases. Meanwhile, in a case where the temperature of the injection motor 46 is equal to or less than the set temperature, the controller 90 stops the injection motor cooling fan 78.

As the injection motor cooling fan 78, one of the fan which discharges gas inside the injection motor cover 77 to the outside thereof and the fan which sucks gas outside the injection motor cover 77 to the inside thereof is used or both thereof are used. An introduction portion of gas or a discharge portion of gas is provided in the injection motor cover 77. Heat radiation fins may be provided on the outer periphery of the injection motor cover 77.

The injection motor cooling fans 78 are attached to the injection motor covers 77. The number of the injection motor cooling fans 78 or the attachment position thereof is not particularly limited.

Meanwhile, the injection motor covers 77 and the injection motor cooling fans 78 are surrounded by the cover 61.

Moreover, the exhaust fan 69 discharges the gas discharged from the insides of the injection motor covers 77 by the injection motor cooling fans 78 to the outside of the cover 61. Accordingly, it is possible to prevent the gas discharged from the insides of the injection motor covers 77 from being returned to the insides of the injection motor covers 77 again. Therefore, it is possible to effectively cool the insides of the injection motor covers 77 and it is possible to shorten operation times of the injection motor cooling fans 78.

The injection motor cover 77 corresponds to a drive source cover described in claims and the injection motor cooling fan 78 corresponds to a drive source cooling fan described in claims.

As shown in Fig. 3, the exhaust fan 69 may be disposed above the screw nut 53 when viewed in a direction perpendicular to a vertical direction and forward and backward directions. In a case where the screw nut 53 moves forward or backward, the exhaust fan 69 may be temporarily disposed above the screw nut 53. The gas discharged from the motion conversion mechanism cover 71 surrounding the screw nut 53 can be effectively discharged to the outside of the cover 61.

As shown in Fig. 3, the exhaust fan 69 may be disposed on the screw nut 53 side of both sides of front and rear sides of the plasticizing motor 45 when viewed in the direction perpendicular to the vertical direction and the forward and backward directions. In a case where the plasticizing motor 45 or the screw nut 53 moves forward or backward, the exhaust fan 69 may be temporarily disposed on the screw nut 53 side of both sides of front and rear sides of the plasticizing motor 45. The gas discharged from the motion conversion mechanism cover 71 surrounding the screw nut 53 can be effectively discharged to the outside of the cover 61 by the exhaust fan 69 while avoiding the plasticizing motor 45.

As shown in Fig. 3, in a case where the screw nut 53 is attached to the rear end surface of the pressure plate 67, the exhaust fan 69 may be disposed on the rear side of the pressure plate 67 when viewed in the direction perpendicular to the vertical direction and the forward and backward directions. In a case where the pressure plate 67 moves forward or backward, the exhaust fan 69 may be temporarily disposed on the rear side of the pressure plate 67.

In addition, the screw nut 53 may be attached to the front end surface of the pressure plate 67. In this case, the exhaust fan 69 may be disposed on the front side of the pressure plate 67 when viewed in the direction perpendicular to the vertical direction and the forward and backward directions. In the case where the pressure plate 67 moves forward or backward, the exhaust fan 69 maybe temporarily disposed on the front side of the pressure plate 67.

As shown in Fig. 1, the exhaust fan 69 may be provided at the center between the pair of motion conversion mechanisms 51 when viewed from above. The gas discharged from the motion conversion mechanism covers 71 can be effectively discharged to the outside of the cover 61.

In addition, the number of the motion conversion mechanisms 51 is not particularly limited. In a case where the number of the motion conversion mechanisms 51 is one, the exhaust fan 69 may overlap the motion conversion mechanism 51 when viewed from above.

As shown in Fig. 1, the exhaust fan 69 may be provided above the center line of the cylinder 41 on the rear side of the cylinder 41. The exhaust fan 69 may overlap the center line of the cylinder 41 when viewed from above. Since sources of heat such as the plasticizing motor 45, the injection motor 46, or the motion conversion mechanism 51 are collected around the center line of the cylinder 41, discharging efficiency of heat is improved. In a case where the motion conversion mechanisms 51 are symmetrically disposed about the center line of the cylinder 41, the exhaust fan 69 is provided between the pair of motion conversion mechanisms 51.

In addition, the exhaust fan 69 may be provided above the center line of the cylinder 41 on the rear side of the plasticizing motor 45 provided behind the cylinder 41 and the front side of the injection motor 46. Since there is almost no object blocking the flow of the gas on the rear side of the plasticizing motor 45 and the front side of the injection motor 46, gas easily flows, and thus, discharging efficiency of heat is improved.

Hereinbefore, the embodiment of the injection unit is described. However, the present invention is not limited to the embodiment or the like, and various modifications and improvements can be applied within a scope of the present invention described in claims.

The injection unit 40 may include an air conditioner which is configured of an indoor unit provided in the accommodation chamber 63 formed of the cover 61 or the like and an outdoor unit provided outside the accommodation chamber 63. The indoor unit and the outdoor unit are connected to each other by a refrigerant pipe, the indoor unit includes an evaporator which evaporates a refrigerant, and the outdoor unit includes a compressor which compresses the refrigerant to increase the temperature of the refrigerant, and a condenser which condenses the high-temperature refrigerant. The refrigerant receives heat generated in the accommodation chamber 63 and is evaporated, is carried to the outside, and is compressed so as to further increase the temperature. The high-temperature refrigerant is cooled by air so as to be condensed, and thereafter, is carried to the inside again.

In the above-described embodiment, the plasticizing motor 45 moves forward or backward along with the pressure plate 67. However, the plasticizing motor 45 may be fixed to the front support 65. In the latter case, the pressure plate 67 is not required. Moreover, in the latter case, the plasticizing motor 45 does not move forward or backward in order to move the screw 43 forward or backward. Accordingly, it is possible to increase acceleration when the forward movement of the screw 43 starts and it is possible to shorten the molding cycle.

In a case where the plasticizing motor 45 is fixed to the front support 65, the plasticizing motor 45, the plasticizing motor 45, the injection motor 46, and the screw 43 maybe coaxially provided. A bearing holder is splined to the output shaft of the plasticizing motor 45. The bearing holder holds a bearing which rotatably supports the extension shaft on the front side of the screw shaft 52. The extension shaft on the rear side of the screw shaft 52 is splined to the output shaft of the injection motor 46. The screw nut 53 is fixed to the rear support 66. The rotary motion of the injection motor 46 is converted into the rotary linear motion of the screw shaft 52, is converted into the linear motion of the bearing holder, and thereafter, is transmitted to the screw 43. The rotary motion of the plasticizing motor 45 is transmitted to the screw 43 via the bearing holder.

In the present embodiment, the injection unit 40 may be an inline-screw type injection unit. However, the injection unit 40 is a preplasticizing type injection unit. The preplasticizing type injection unit supplies molten molding material inside a plasticizing cylinder to an injection cylinder and injects the molding material from the injection cylinder into the mold unit. A screw is disposed to be rotatable or to be rotatable and movable forward or backward in the plasticizing cylinder and a plunger is disposed to be movable forward or backward in the injection cylinder. In any type of injection unit, the screw corresponds to the injection member described in claims.

### Brief Description of the Reference Symbols

40: injection unit
45: plasticizing motor
46: injection motor
51: motion conversion mechanism
52: screw shaft
53: screw nut
61: cover
69: exhaust fan
71: motion conversion mechanism cover
72: motion conversion mechanism cooling fan
75: plasticizing motor cover
76: plasticizing motor cooling fan
77: injection motor cover
78: injection motor cooling fan

## Claims

1. An injection unit (40), comprising:
a drive source (45, 46);
a mechanical element (51, 52, 53, 68) which is operated by the drive source (45, 46);
a cover (61) which surrounds the drive source (45, 46) and the mechanical element (51, 52, 53, 68); and
an exhaust fan (69) configured to discharge gas inside the cover (61) to the outside of the cover (61),
**characterized by**:
a mechanical element cover (71) which surrounds the mechanical element (51, 52, 53, 68); and
a mechanical element cooling fan (72) configured to discharge gas inside the mechanical element cover (71) to the outside of the mechanical element cover (71),
wherein the cover (61) surrounds the drive source (45, 46), the mechanical element (51, 52, 53, 68), the mechanical element cover (71), and the mechanical element cooling fan (72), and
wherein the exhaust fan (69) discharges the gas discharged from the inside of the mechanical element cover (71) by the mechanical element cooling fan (72) to the outside of the cover (61).

2. An injection unit (40), comprising:
a drive source (45, 46);
a mechanical element (51, 52, 53, 68) which is operated by the drive source (45, 46);
a cover (61) which surrounds the drive source (45, 46) and the mechanical element (51, 52, 53, 68); and
an exhaust fan (69) configured to discharge gas inside the cover (61) to the outside of the cover (61),
**characterized by**:
a drive source cover (75, 77) which surrounds the drive source (45, 46); and
a drive source cooling fan (76, 78) configured to discharge gas inside the drive source cover (75, 77) to the outside of the drive source cover (75, 77),
wherein the cover (61) surrounds the drive source (45, 46), the mechanical element (51, 52, 53, 68), the drive source cover (75, 77), and the drive source cooling fan (76, 78), and
wherein the exhaust fan (69) discharges the gas discharged from the inside of the drive source cover (75, 77) by the drive source cooling fan (76, 78) to the outside of the cover (61).

3. The injection unit (40) according to any one of claims 1 to 2, further comprising:
a cylinder (41) configured to heat a molding material; and
an injection member (43) which is disposed to be movable forward or backward and rotatable inside the cylinder (41).

4. The injection unit (40) according to claim 3,
wherein the drive source (45, 46) includes an injection motor (46) which moves the injection member (43) forward or backward,
wherein the mechanical element (51, 52, 53, 68) includes a screw shaft (52) and a screw nut (53) which is screwed to the screw shaft (52) and converts a rotary motion of the injection motor (46) to a linear motion of the injection member (43), and
wherein the exhaust fan (69) is disposed above the screw nut (53) when viewed in a direction perpendicular to a vertical direction and forward and backward directions.

5. The injection unit (40) according to claim 3 or 4,
wherein the drive source (45, 46) includes a plasticizing motor (45) which rotates the injection member (43), and
wherein the exhaust fan (69) is disposed on the screw nut side of both sides of front and rear sides of the plasticizing motor (45) when viewed in the direction perpendicular to the vertical direction and the forward and backward directions.

## Patentansprüche

1. Einspritzeinheit (40), umfassend:
eine Antriebsquelle (45, 46);
ein mechanisches Element (51, 52, 53, 68), das von der Antriebsquelle (45, 46) betrieben wird;
eine Abdeckung (61), die die Antriebsquelle (45, 46) und das mechanische Element (51, 52, 53, 68) umgibt; und
ein Abluftgebläse (69), das so konfiguriert ist, dass es Gas von der Innenseite der Abdeckung (61) zu der Außenseite der Abdeckung (61) abgibt,
**gekennzeichnet durch**:
eine Abdeckung (71) für mechanisches Element, die das mechanische Element (51, 52, 53, 68) umgibt; und
ein Kühlgebläse (72) für mechanisches Element, das so konfiguriert ist, dass es Gas von der Innenseite der Abdeckung (71) für mechanisches Element zu der Außenseite der Abdeckung (71) für mechanisches Element abgibt,
wobei die Abdeckung (61) die Antriebsquelle (45, 46), das mechanische Element (51, 52, 53, 68), die Abdeckung (71) für mechanisches Element und das Kühlgebläse (72) für mechanisches Element umgibt, und
wobei das Abluftgebläse (69) das von der Innenseite der Abdeckung (71) für mechanisches Element durch das Kühlgebläse (72) für mechanisches Element abgegebene Gas zu der Außenseite der Abdeckung (61) abgibt.

2. Einspritzeinheit (40), umfassend:
eine Antriebsquelle (45, 46);
ein mechanisches Element (51, 52, 53, 68), das von der Antriebsquelle (45, 46) betrieben wird;
eine Abdeckung (61), die die Antriebsquelle (45, 46) und das mechanische Element (51, 52, 53, 68) umgibt; und
ein Abluftgebläse (69), das so konfiguriert ist, dass es Gas von der Innenseite der Abdeckung (61) zu der Außenseite der Abdeckung (61) abgibt,
**gekennzeichnet durch**:
eine Antriebsquellenabdeckung (75, 77), die die Antriebsquelle (45, 46) umgibt; und
ein Antriebsquellen-Kühlgebläse (76, 78), das so konfiguriert ist, dass es Gas von der Innenseite der Antriebsquellenabdeckung (75, 77) zu der Außenseite der Antriebsquellenabdeckung (75, 77) abgibt,
wobei die Abdeckung (61) die Antriebsquelle (45, 46), das mechanische Element (51, 52, 53, 68), die Antriebsquellenabdeckung (75, 77) und das Antriebsquellenkühlgebläse (76, 78) umgibt, und
wobei das Abluftgebläse (69) das von der Innenseite der Antriebsquellenabdeckung (75, 77) durch das Antriebsquellenkühlgebläse (76, 78) abgegebene Gas zu der Außenseite der Abdeckung (61) abgibt.

3. Einspritzeinheit (40) nach einem der Ansprüche 1 bis 2, ferner umfassend:
einen Zylinder (41), der konfiguriert ist, ein Formmaterial zu erwärmen; und
ein Einspritzteil (43), das so angeordnet ist, dass es vorwärts oder rückwärts bewegbar ist und innerhalb des Zylinders (41) drehbar ist.

4. Einspritzeinheit (40) nach Anspruch 3,
wobei die Antriebsquelle (45, 46) einen Einspritzmotor (46) umfasst, der das Einspritzelement (43) vorwärts oder rückwärts bewegt,
wobei das mechanische Element (51, 52, 53, 68) eine Spindelwelle (52) und eine Spindelmutter (53) umfasst, die auf die Spindelwelle (52) geschraubt ist und eine Drehbewegung des Einspritzmotors (46) in eine lineare Bewegung des Einspritzteils (43) umwandelt, und
wobei das Abluftgebläse (69) oberhalb der Schraubenmutter (53) angeordnet ist, wenn in einer Richtung senkrecht zu einer vertikalen Richtung und in Vorwärts- und Rückwärtsrichtung betrachtet.

5. Einspritzeinheit (40) nach Anspruch 3 oder 4,
wobei die Antriebsquelle (45, 46) einen Plastifiziermotor (45) umfasst, der das Einspritzteil (43) dreht, und
wobei das Abluftgebläse (69) auf der Spindelmutterseite beider Seiten von Vorder- und Rückseiten des Plastifiziermotors (45) angeordnet ist, wenn in der Richtung senkrecht zu der vertikalen Richtung und in der Vorwärts- und Rückwärtsrichtung betrachtet.

## Revendications

1. Une unité d'injection (40) comprenant :
une source d'entraînement (45, 46) ;
un élément mécanique (51, 52, 53, 68) qui est actionné par la source d'entraînement (45, 46) ;
un couvercle (61) qui entoure la source d'entraînement (45, 46) et l'élément mécanique (51, 52, 53, 68) ; et
un ventilateur d'aspiration (69) configuré pour décharger le gaz à l'intérieur du couvercle (61) à l'extérieur du couvercle (61),
**caractérisée par** :
un couvercle d'élément mécanique (71) qui entoure l'élément mécanique (51, 52, 53, 68) ; et
un ventilateur de refroidissement d'élément mécanique (72) configuré pour décharger le gaz à l'intérieur du couvercle d'élément mécanique (71) à l'extérieur du couvercle d'élément mécanique (71),
dans lequel le couvercle (61) entoure la source d'entraînement (45, 46), l'élément mécanique (51, 52, 53, 68), le couvercle d'élément mécanique (71) et le ventilateur de refroidissement d'élément mécanique (72), et
dans lequel le ventilateur d'aspiration (69) décharge le gaz déchargé de l'intérieur du couvercle d'élément mécanique (71) par le ventilateur de refroidissement d'élément mécanique (72) à l'extérieur du couvercle (61).

2. Une unité d'injection (40) comprenant :
une source d'entraînement (45, 46) ;
un élément mécanique (51, 52, 53, 68) qui est actionné par la source d'entraînement (45, 46) ;
un couvercle (61) qui entoure la source d'entraînement (45, 46) et l'élément mécanique (51, 52, 53, 68) ; et
un ventilateur d'aspiration (69) configuré pour décharger le gaz à l'intérieur du couvercle (61) à l'extérieur du couvercle (61),
**caractérisée par** :
un couvercle de source d'entraînement (75, 77) qui entoure la source d'entraînement (45, 46) ; et
un ventilateur de refroidissement de source d'entraînement (76, 78) configuré pour décharger le gaz à l'intérieur du couvercle de source d'entraînement (75, 77) à l'extérieur du couvercle de source d'entraînement (75, 77),
dans lequel le couvercle (61) entoure la source d'entraînement (45, 46), l'élément mécanique (51, 52, 53, 68), le couvercle de source d'entraînement (75, 77) et le ventilateur de refroidissement de source d'entraînement (76, 78), et
dans lequel le ventilateur d'aspiration (69) décharge le gaz déchargé de l'intérieur du couvercle de source d'entraînement (75, 77) par le ventilateur de refroidissement de source d'entraînement (76, 78) à l'extérieur du couvercle (61).

3. L'unité d'injection (40) selon l'une quelconque des revendications 1 à 2, comprenant en outre :
un cylindre (41) configuré pour chauffer un matériau de moulage ; et
un élément d'injection (43) qui est disposé pour être mobile vers l'avant ou vers l'arrière et pouvant tourner à l'intérieur du cylindre (41).

4. L'unité d'injection (40) selon la revendication 3,
dans laquelle la source d'entraînement (45, 46) comprend un moteur d'injection (46) qui déplace l'élément d'injection (43) vers l'avant ou vers l'arrière,
dans laquelle l'élément mécanique (51, 52, 53, 68) comprend une tige de vis (52) et un écrou de vis (53) qui est vissé sur la tige de vis (52) et convertit un mouvement de rotation du moteur à injection (46) en un mouvement linéaire de l'élément d'injection (43), et
dans laquelle le ventilateur d'aspiration (69) est disposé au-dessus de l'écrou de vis (53), lorsqu'il est observé dans une direction perpendiculaire à une direction verticale et dans les directions vers l'avant et vers l'arrière.

5. L'unité d'injection (40) selon la revendication 3 ou 4,
dans laquelle la source d'entraînement (45, 46) comprend un moteur de plastification (45) qui fait tourner l'élément d'injection (43), et
dans laquelle le ventilateur d'aspiration (69) est disposé du côté de l'écrou de vis des deux côtés des côtés avant et arrière du moteur de plastification (45), lorsqu'il est observé dans la direction perpendiculaire à la direction verticale et aux directions vers l'avant et vers l'arrière.
